# EUROPEAN PATENT SPECIFICATION

(11) **EP 4 446 874 B1**
(45) Date of publication and mention of the grant of the patent: **25.11.2026**
(21) Application number: 22902977.2
(22) Date of filing: 29.09.2022
(51) Int. Cl.: G06F 8/65, G06F 11/14

(54) **ECU REMOTE UPGRADING METHOD AND SYSTEM**
VERFAHREN UND SYSTEM ZUR FERNAKTUALISIERUNG EINER ECU
PROCÉDÉ ET SYSTÈME DE MISE À NIVEAU À DISTANCE D'ECU

(30) Priority: 06.12.2021 CN 202111481046
(43) Date of publication of application: 16.10.2024
(73) Proprietor: Guangzhou Automobile Group Co., Ltd., Guangzhou, Guangdong 510030 (CN)
(72) Inventor: LIN, Yuting, Guangzhou, Guangdong 511434 (CN); YANG, Yi, Guangzhou, Guangdong 511434 (CN); ZHANG, Junlei, Guangzhou, Guangdong 511434 (CN); FU, Mengjia, Guangzhou, Guangdong 511434 (CN); YIN, Wenjie, Guangzhou, Guangdong 511434 (CN)
(74) Representative: Metida
(86) International application number: PCT/CN2022/122605
(87) International publication number: WO 2023/103552

(56) References cited:
- WO-A1-2021/008184
- CN-A- 112 104 736
- CN-A- 112 328 282
- CN-A- 113 391 830
- CN-A- 113 411 285
- CN-A- 113 411 285
- CN-A- 113 497 819
- CN-A- 113 626 056
- KR-A- 20140 146 718

## Description

### CROSS-REFERENCE TO RELATED APPLICATIONS

This application claims priority to Chinese Patent Application No. 202111481046.6 filed on December 6, 2021.

### TECHNICAL FIELD

The subject matter herein generally relates to a technology of upgrade of an electronic control unit, and particularly to an ECU remote upgrade method and an ECU remote upgrade system.

### BACKGROUND

With a development of smart network connection of vehicles, Internet of Vehicles is becoming more and more important. Compared with traditional vehicles, an ECU (electronic control unit) such as IVI, TBOX, ADAS, and the ECU with new energy has more and more software update iterations, thereby providing users with better experiences. The OTA (Over-the-air programming) provides an online upgrade method, you can activate the upgrade on the user interface of the vehicle, to complete the upgrade of the vehicle system, which is the same as the upgrade of a mobile phone system. Compared with the traditional after-sales software upgrade method at the offline 4S shop, the OTA remote upgrade method can realize rapid software iteration, software upgrades, cost savings, and improved user experience, and can largely avoid a risk of vehicle recalls due to software problem, however, the person who performs the OTA remote upgrades is the ordinary vehicle owner rather than the professional after-sales engineer, therefore, the reliability and security of the OTA remote upgrades are required to be guaranteed to ensure the user experiences.

More and more ECUs of the vehicles put forward an urgent requirement for remote upgrades, there are a number of power supply modes for ECUs, for example, based on the different sources of power supply of ECUs, two power supply modes for main types of ECUs can be provided. A first power supply mode is that ECU is powered by the positive electrode of the power battery, under the first power supply mode, the ECU function can only be enabled when the vehicle is in ON gear, while the ECU function cannot be enabled when the vehicle is in OFF gear. A second power mode is that ECU is powered by both the positive battery and the normal battery, under the second power mode, the ECU function can be enabled in both ON and OFF gear of the vehicle.

However, the OTA remote upgrade process requires the upgraded ECU and the related nodes to maintain power supply, and the existing OTA remote upgrade technology applies the vehicle-side control technology and the vehicle-mounted interactive form to perform OTA remote upgrades in OFF gear. Before the upgrade, strict upgrade conditions are checked to make sure that the vehicle is powered off and in OFF gear, and the upgrade process is maintained in the vehicle OFF gear state, and the OTA upgrade is completed with the support of the power supply of the vehicle battery. The user only needs to turn off the power supply, lock the vehicle, and leave the vehicle under the interactive prompt of the vehicle, and complete the preparations before the upgrade, and then leave the vehicle and wait until the upgrade is completed.

However, the above-mentioned existing OTA remote upgrade technology only supports the ECU of the above-mentioned second power supply mode to be upgraded in OFF gear, while the ECU of the above-mentioned first power supply mode cannot be remotely upgraded through OTA at present, and requires to be recalled offline through the 4S store, offline software updates are performed with the support of after-sales engineers and professional equipment. CN112104736A provides an OTA-based multi-ECU upgrade method including a target vehicle obtaining an upgrade task, the upgrade task including identifiers of multiple target ECU controllers corresponding to an identifier of the target vehicle, link addresses of upgrade software packages corresponding to the identifier of each target ECU controller, and an upgrade order determined based on dependencies among the upgrade software packages; the target vehicle respectively obtaining the upgrade software packages corresponding to the identifier of each target controller according to the link addresses of the upgrade software packages corresponding to the identifier of each target ECU controller; and the target vehicle upgrading each target ECU controller sequentially according to the upgrade order. CN113411285A provides a vehicle ECU remote upgrade method, T-BOX, gateway, system, and storage medium, the method includes: when it is determined that a vehicle satisfies preset upgrade conditions based on the vehicle's status, initiating security authentication to a gateway; if a security authentication pass prompt fed back by the gateway is received, sending an OTA mode entry request to the gateway; and after receiving an OTA mode signal broadcast by the gateway, performing software upgrade on a target ECU, functions of all ECUs in the vehicle are disabled when the vehicle enters the OTA mode, thereby reducing dangerous situations caused by the operation of other ECUs during the upgrade of the target ECU. CN113626056A provides a vehicle remote upgrade method, apparatus, electronic device, vehicle-mounted terminal, and storage medium, the method includes: in response to a user's software upgrade instruction, determining whether a current state of a vehicle satisfies an upgrade condition; and if yes, obtaining upgrade data from an upgrade server and transmitting the upgrade data to an electronic control unit, so that the electronic control unit performs an upgrade according to the upgrade data in an over-the-air (OTA) mode.

### SUMMARY

A purpose of the present disclosure is to provide a method and an ECU remote upgrade method an ECU remote upgrade system, for solving the above-mentioned technical problem that the ECU in the first power supply mode cannot be remotely upgraded by OTA, and extending an application scope of the remote upgrade technology of OTA in the aspect of the ECU upgrade.

For realizing the above-mentioned purpose, an ECU remote upgrade method is provided in the present disclosure.

While the invention is defined by the independent claims, the method includes:
in response to receive an upgrade instruction input by a user, obtaining vehicle state information, and determining whether the vehicle state information satisfies predetermined upgrade preconditions;
when the vehicle state information satisfies the predetermined upgrade preconditions, identifying a power supply mode of a target ECU to be upgraded, and identifying a vehicle current gear; wherein the power supply mode includes a first power supply mode and a second power supply mode, the first power supply mode is that a power battery supplies power to the target ECU, and the target ECU is enabled in a vehicle ON gear; the second power supply mode is that both the power battery and a storage battery supply power to the target ECU, and the target ECU is enabled in both the vehicle ON gear and a vehicle OFF gear;
when the power supply mode of the target ECU is the first power supply mode, and the vehicle current gear is an ON gear, starting an upgrade process of the target ECU;
when the power supply mode of the target ECU is the first power supply mode, and the vehicle current gear is an OFF gear, transmitting a power-on request to the vehicle to activate the vehicle current gear to be the ON gear, when the vehicle current gear is activated to be the ON gear, starting the upgrade process of the target ECU, when the vehicle current gear is not activated to be the ON gear, cancelling the upgrade process of the target ECU;
when the power supply mode of the target ECU is the second power supply mode, and the vehicle current gear is the OFF gear, starting the upgrade process of the target ECU; and
when the power supply mode of the target ECU is the second power supply mode, and the vehicle current gear is the ON gear, cancelling the upgrade process of the target ECU.

According to the invention, the method further includes:
when the power supply mode of the target ECU is the first power supply mode, before starting the upgrade process of the target ECU, transmitting a charging signal to a vehicle controller to control the vehicle controller to maintain charging the storage battery during the upgrade process of the target ECU.

In one embodiment, the method further includes:
when executing the upgrade process of the target ECU, when the upgrade fails, automatically initiating a retry upgrade;
when the retry upgrade fails, performing a software rollback on the target ECU; when the software rollback succeeds, determining that the upgrade fails, and relevant functions of the target ECU are effective; when the software rollback fails, determining that the upgrade fails, and the relevant functions of the target ECU are ineffective;
generating an upgrade result, displaying the upgrade result on an AVNT interaction interface, and reporting the upgrade result to a background OTA server; wherein the upgrade result includes that the upgrade succeeds, the upgrade fails and the software rollback succeeds, or the upgrade fails and the software rollback fails.

In one embodiment, the method further includes:
when the power supply mode of the target ECU is the first power supply mode, after the upgrade result is generated, obtaining the current gear of a vehicle controller, when the current gear of the vehicle controller is the ON gear, transmitting a power-off request to the vehicle controller to control the vehicle controller to power off.

According to the invention, the vehicle state information includes an ACC gear, a vehicle locking defense state, a vehicle speed, an electric quantity of the storage battery, battery voltage, a vehicle ignition state;
the predetermined upgrade preconditions comprise that the ACC gear is an ON gear, the vehicle locking defense state is activated, the vehicle speed is 0, the electric quantity of the storage battery is between a predetermined electric quantity range, the battery voltage is between a predetermined voltage range, and the vehicle ignition state is flameout.

In one embodiment, the method further includes:
before starting the upgrade process of the target ECU, disabling a PEPS function and all CAN application message communication.

An ECU remote upgrade system is further provided in the embodiment of the present disclosure, the system includes:
an upgrade triggering unit, used to obtain vehicle state information in response to receive an upgrade instruction input by a user, and determine whether the vehicle state information satisfies predetermined upgrade preconditions;
an identification unit, used to identify a power supply mode of a target ECU to be upgraded when the vehicle state information satisfies the predetermined upgrade preconditions, and identify a vehicle current gear; wherein the power supply mode includes a first power supply mode and a second power supply mode, the first power supply mode is that a power battery supplies power to the target ECU, and the target ECU is enabled in a vehicle ON gear; the second power supply mode is that both the power battery and a storage battery supply power to the target ECU, and the target ECU is enabled in both the vehicle ON gear and a vehicle OFF gear;
an upgrading unit, used to start an upgrade process of the target ECU, when the power supply mode of the target ECU is the first power supply mode, and the vehicle current gear is an ON gear; when the power supply mode of the target ECU is the first power supply mode, and the vehicle current gear is an OFF gear, transmit a power-on request to the vehicle to activate the vehicle current gear to be the ON gear, when the vehicle current gear is activated to be the ON gear, start the upgrade process of the target ECU, when the vehicle current gear is not activated to be the ON gear, cancel the upgrade process of the target ECU; when the power supply mode of the target ECU is the second power supply mode, and the vehicle current gear is the OFF gear, start the upgrade process of the target ECU; and when the power supply mode of the target ECU is the second power supply mode, and the vehicle current gear is the ON gear, cancel the upgrade process of the target ECU.

According to the invention, the system further includes:
a charging control unit, used to transmit a charging signal to a vehicle controller to control the vehicle controller to maintain charging the storage battery during the upgrade process of the target ECU, when the power supply mode of the target ECU to be upgraded is the first power supply mode, before starting the upgrade process of the target ECU.

In one embodiment, the upgrading unit is further used to:
when executing the upgrade process of the target ECU, when the upgrade fails, automatically initiate a retry upgrade;
when the retry upgrade fails, perform a software rollback on the target ECU; when the software rollback succeeds, determine that the upgrade fails, and relevant functions of the target ECU are effective; when the software rollback fails, determine that the upgrade fails, and the relevant functions of the target ECU are ineffective;
generate an upgrade result, display the upgrade result on an AVNT interaction interface, and report the upgrade result to a background OTA server; wherein the upgrade result includes that the upgrade succeeds, the upgrade fails and the software rollback succeeds, or the upgrade fails and the software rollback fails.

In one embodiment, the upgrading unit is further used to:
when the power supply mode of the target ECU is the first power supply mode, after the upgrade result is generated, obtain a current gear of the vehicle controller, when the current gear of the vehicle controller is the ON gear, transmit a power-off request to the vehicle controller to control the vehicle controller to power off.

The embodiments of the present disclosure have at least the following beneficial effects:
in view of the above-mentioned OTA remote upgrade problem of ECU in the first power mode, strict upgrade conditions are checked to ensure a suitable upgrade scenario and vehicle environment, by actively determining the power mode of the ECU, the basic configuration of the upgrade environment of the ECU in different power modes is automatically switched, and the ECU compatible with multiple power modes can complete the remote refresh of the ECU under the same vehicle environmental condition, and the remote refresh is performed based on the same set of interactive control process for upgrading, the remote upgrade process adapts to the power mode of the ECU without user awareness, which solves the technical problem that the ECU in the first power mode cannot be remotely upgraded by OTA, and extends an application scope of OTA remote upgrade technology in the ECU upgrade.

Other features and advantages of the embodiments of the present disclosure are described in subsequent description.

### BRIEF DESCRIPTION OF THE DRAWINGS

In order to more clearly state the technical solution in the embodiment of the present disclosure or the prior art, the following is a brief introduction of the drawings required to be used in the description of the embodiment or the prior art, it is obvious that the drawings described below are only some embodiments of the present disclosure, for those skilled in the art, other drawings can also be obtained from these drawings without creative labor.
FIG. 1 illustrates a flowchart of an embodiment of an ECU remote upgrade method according to the present disclosure.
FIG. 2 is a block view of an embodiment of an ECU remote upgrade system according to the present disclosure.

### DETAILED DESCRIPTION

The various exemplary embodiments, features, and aspects of the present disclosure are described in detail below with reference to the attached drawings. In addition, in order to better illustrate the present disclosure, more specific details are provided in the following specific embodiments. It should be understood by those skilled in the art that the present disclosure can be implemented without certain specific details. In some instances, means well known to those skilled in the art are not described in detail in order to highlight the subject matter of the present disclosure.

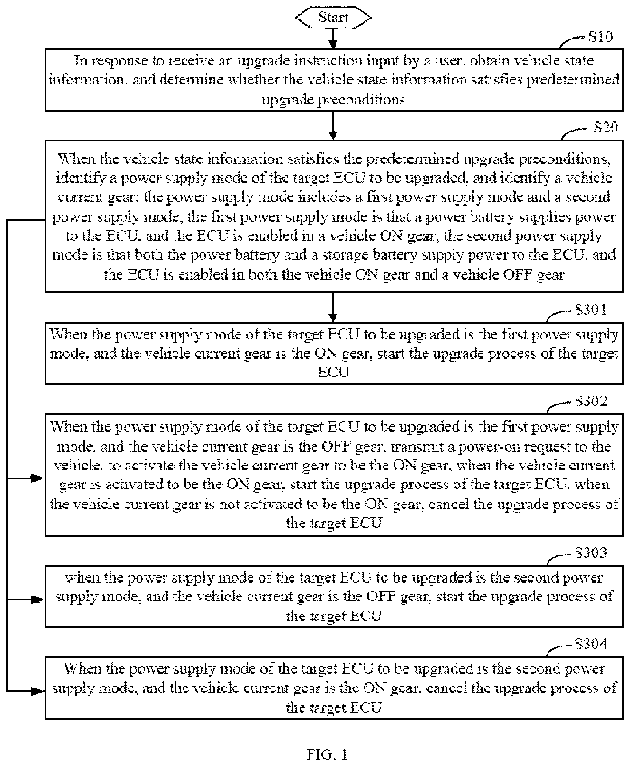

Referring to FIG. 1, an ECU remote upgrade method is provided, which is a solution for OTA remote upgrade of the ECUs compatible with and supporting different power supply modes. The method can be executed by a T-box (Telematics BOX), the method of the present disclosure includes the following steps:
S10, in response to receive an upgrade instruction input by a user, obtain vehicle state information, and determine whether the vehicle state information satisfies predetermined upgrade preconditions.
   In detail, the user operates an OTA remote upgrade of a target ECU on an AVNT (Audio Video Navigation Telematics) interaction interface, and activates an upgrade process of the target ECU according to an upgrade guide, an AVNT system converts the user operations to an upgrade starting instruction, and transmits the upgrade starting instruction to the T-box, and the T-box activates the upgrade process.
S20, when the vehicle state information satisfies the predetermined upgrade preconditions, identify a power supply mode of the target ECU to be upgraded, and identify a vehicle current gear. In one embodiment, the power supply mode includes a first power supply mode and a second power supply mode, the first power supply mode is that a power battery supplies power to the target ECU, and the target ECU is enabled in a vehicle ON gear; the second power supply mode is that both the power battery and a storage battery supply power to the target ECU, and the target ECU is enabled in both the vehicle ON gear and a vehicle OFF gear.

In detail, the upgrade precondition check includes checking signal states of the predetermined upgrade preconditions. When the signal states are passed the upgrade precondition check, the upgrade process will continue. When the signal states are not passed the upgrade precondition check, the upgrade process will be canceled. The upgrade precondition check can be flexibly configured according to ECU upgrade requirements. For example, the check that the vehicle state information satisfies the predetermined upgrade preconditions can refer to Table 1 below:

**Table 1-Vehicle Upgrade Precondition Check**

| Serial number | Upgrade precondition | State that satisfies the upgrade precondition | Check necessity |
|---|---|---|---|
| 1 | ACC gear | OFF gear | Yes |
| 2 | Vehicle locking defense state | Activated | Yes |
| 3 | Vehicle speed | 0 | Yes |
| 4 | Electric quantity of the storage battery | Background configured by OTA | Yes |
| 5 | Battery voltage | Background configured by OTA | Yes when the vehicle has no level signal of the storage battery |
| 6 | Handbrake state | Handbrake tightened | Optional |
| 7 | Vehicle ignition state | Shutdown/Not Ready | Yes |
| 8 | High voltage charge state | Not charged | Yes (new energy vehicles only) |
| 9 | Vehicle high voltage state | Non high voltage state | Yes (new energy vehicles only) |
| 10 | Vehicle gear | P gear | Optional |
| 11 | Belt state of a driver's seat | Not belt | Optional |

As shown in Table 1 above, 11 kinds of vehicle state information are listed, and the check of some vehicle state information is optional, or is required to be determined according to a power type of the vehicle, such as whether the vehicle is a new energy vehicle.

S301, when the power supply mode of the target ECU to be upgraded is the first power supply mode, and the vehicle current gear is the ON gear, start the upgrade process of the target ECU.

S302, when the power supply mode of the target ECU to be upgraded is the first power supply mode, and the vehicle current gear is the OFF gear, transmit a power-on request to the vehicle, to activate the vehicle current gear to be the ON gear, when the vehicle current gear is activated to be the ON gear, start the upgrade process of the target ECU, when the vehicle current gear is not activated to be the ON gear, cancel the upgrade process of the target ECU.

In detail, the T-BOX of the vehicle interacts with the IBCM (intelligence body control Module) of the vehicle, the T-BOX transmits a power-on instruction message to the IBCM, if the IBCM succeeds to be powered on, the upgrade process will continue. If the IBCM fails to be powered on, the target ECU cannot be refreshed, and a result that the target ECU does not satisfy the power-on requirement is returned and displayed on the vehicle-machine interactive interface.

S303, when the power supply mode of the target ECU to be upgraded is the second power supply mode, and the vehicle current gear is the OFF gear, start the upgrade process of the target ECU.

S304, when the power supply mode of the target ECU to be upgraded is the second power supply mode, and the vehicle current gear is the ON gear, cancel the upgrade process of the target ECU.

The above steps S301-S304 are parallel steps, different upgrade decisions are made in different scenarios, when the gear position of the vehicle is the ON gear, the ECU in the first power mode can enable diagnostic and refresh functions. When the gear position of the vehicle is the OFF gear, the ECU in the second power mode can enable diagnostic and refresh functions.

In detail, in one embodiment, S301 and S302 both include: before starting the upgrade process of the target ECU, transmitting a charging signal to a vehicle controller, to control the vehicle controller to maintain charging the storage battery during the upgrade process of the target ECU.

In detail, in one embodiment, when the vehicle is in the ON gear, during the upgrade process, the charging signal is transmitted to the vehicle controller VCU (Vehicular Communication Unit) to control the VCU to charge the storage battery during the upgrade process, thereby avoiding a risk of feeding of the storage battery after the upgrade is completed, and resulting in failure of the vehicle to be powered on normally.

It should be noted that in an actual market application of the existing OTA remote upgrade, in order to avoid the situation of the feeding of the storage battery after the completion of the OTA remote upgrade of the market vehicles, a upgrade precondition of checking a level value of the storage battery is set background, the upgrade precondition is checked, and after the check is passed, the upgrade process can be started. In order to avoid the power feeding situation, a threshold value of the level value of the storage battery is easily set to be too high, which leads to a decrease of the upgrade completion rate in the actual market. However, in this embodiment, the VCU is set to be controlled to charge the storage battery during the upgrade process, which can reduce the threshold value of the level value of the storage battery, and avoid the situation that the upgrade completion rate in the actual market is reduced due to the threshold value of the level value of the storage battery being too high.

In detail, in one embodiment, S301-S304 include the following (1)-(3):
(1) when executing the ECU upgrade process, and the upgrade fails, automatically initiating a retry upgrade;
(2) when the retry upgrade fails, perform a software rollback on the target ECU; when the software rollback succeeds, determining that the upgrade fails, and the relevant functions of the target ECU are effective, the use of the vehicle will not be affected; when the software rollback fails, determining that not only the upgrade fails, and the relevant functions of the target ECU are ineffective, it is required the user to solve the ineffectiveness problem after sale.
   It should be noted that a retry mechanism after upgrade failure is added in this embodiment, to ensure reasonable retries in the upgrade failure scenario and reduce a certain upgrade failure rate; and the software rollback is performed to ensure that the ECU can be restored to the normal working state if the upgrade fails;
(3) generating an upgrade result, displaying the upgrade result on the AVNT interaction interface, and reporting the upgrade result to a background OTA server; the upgrade result includes: the upgrade succeeds, the upgrade fails and the software rollback succeeds, the upgrade fails and the software rollback fails.

In detail, in one embodiment, S301 and S302 include:
After the upgrade result is generated, obtaining the a current gear of a vehicle controller, when the current gear of the vehicle controller is the ON gear, transmitting a power-off request to the vehicle controller to control the vehicle controller to power off.

In detail, the TBOX interacts with the IBCM, and transmits a power-off instruction message to the IBCM. If the IBCM succeeds to be powered off, the upgrade process is completed, and the vehicle environment is restored; if the IBCM fails to be powered off, predetermined operations correspond to timeout in waiting for power-off are performed, for example, when the upgrade process is completed, a log of the timeout in waiting for power-off is generated and stored.

In detail, in one embodiment, S301-S304 further include:
Before starting the upgrade process of the target ECU, disabling a PEPS (Passive-Entry-Passive-Start) function and all CAN (Controller Area Network) application message communication.

For example, the PEPS function is disabled by:
1.1) controlling a PEPS system into an expansion mode by a 10 03diagnostic service;
1.2 ) controlling the PEPS system into a boot mode by a 10 02 diagnostic service;
1.3) maintaining the PEPS system in the boot mode by a 3E 80 service.

For example, all CAN application message communication is disabled by:
2.1) controlling all CAN ECUs into the expansion mode by the 10 03 diagnostic service;
2.2) disabling all CAN application messages by a 28 03 01 diagnostic service;
2.3) maintaining to disable all CAN application message communication by the 3E 80 service.

It should be noted that the disabling of the PEPS function and all application message communication of the CAN in this embodiment ensures that the interference of other messages on the vehicle bus during the upgrade process is prioritized for diagnosis and refresh, thereby improving a success rate of the upgrade.

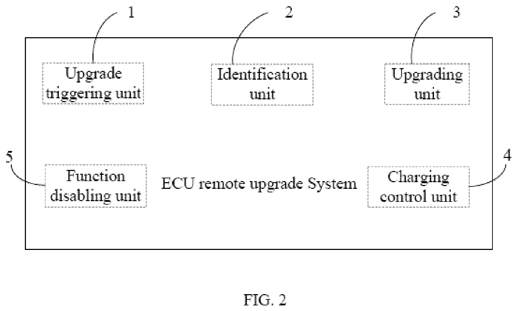

Referring to FIG. 2, an ECU remote upgrade system is provided in this embodiment, the system can be installed in the T-Box of the vehicle, the system corresponds to the method in above-mentioned embodiment, and the system in this embodiment includes a number of functional units, the number of functional units may be utilized to perform corresponding a number of steps of the method in the above-mentioned embodiment, in detail, the number of functional units include:
an upgrade triggering unit 1, used to obtain vehicle state information, and determine whether the vehicle state information satisfies predetermined upgrade preconditions, in response to receive an upgrade instruction input by a user;
an identification unit 2, used to identify a power supply mode of the target ECU to be upgraded, and identify a vehicle current gear, when the vehicle state information satisfies the predetermined upgrade preconditions; the power supply mode includes a first power supply mode and a second power supply mode, the first power supply mode is that a power battery supplies power to the target ECU, and the target ECU is enabled in a vehicle ON gear; the second power supply mode is that both the power battery and a storage battery supply power to the target ECU, and the target ECU is enabled in both the vehicle ON gear and a vehicle OFF gear;
an upgrading unit 3, used to start an upgrade process of the target ECU, when the power supply mode of the target ECU is the first power supply mode, and the vehicle current gear is an ON gear; when the power supply mode of the target ECU is the first power supply mode, and the vehicle current gear is an OFF gear, transmit a power-on request to the vehicle to activate the vehicle current gear to be the ON gear, when the vehicle current gear is activated to be the ON gear, start the upgrade process of the target ECU, when the vehicle current gear is not activated to be the ON gear, cancel the upgrade process of the target ECU; when the power supply mode of the target ECU is the second power supply mode, and the vehicle current gear is the OFF gear, start the upgrade process of the target ECU; and when the power supply mode of the target ECU is the second power supply mode, and the vehicle current gear is the ON gear, cancel the upgrade process of the target ECU.

In detail, in this embodiment, the system further includes:
a charging control unit 4, used to transmit a charging signal to a vehicle controller before starting the upgrade process of the target ECU, to control the vehicle controller to maintain charging the storage battery during the upgrade process of the target ECU.

In detail, in this embodiment, the upgrading unit 3 is further used to:
when executing the ECU upgrade process, and the upgrade fails, automatically initiate a retry upgrade;
when the retry upgrade fails, perform a software rollback on the target ECU; when the software rollback succeeds, determine that although the upgrade fails, the relevant functions of the target ECU are effective, the use of the vehicle will not be affected; when the software rollback fails, determine that not only the upgrade fails, and the relevant functions of the target ECU are ineffective;
generate an upgrade result, display the upgrade result on the AVNT interaction interface, and report the upgrade result to a background OTA server; the upgrade result includes: the upgrade succeeds, the upgrade fails and the software rollback succeeds, the upgrade fails and the software rollback fails.

In detail, in this embodiment, the upgrading unit 3 is further used to:
when the power supply mode of the target ECU to be upgraded is the first power supply mode, after the upgrade result is generated, obtain a current gear of the vehicle controller, when the current gear of the vehicle controller is the ON gear, transmit a power-off request to the vehicle controller to control the vehicle controller to power off.

In detail, in this embodiment, the system further includes:
a function disabling unit 5, used to disable a PEPS function and all CAN application message communication before starting the upgrade process of the target ECU.

The system of the above-described embodiments is only illustrative, where the units described as separate components may or may not be physically separated, and the components shown as units may or may not be physical units, that is, they may located in one place, or can be distributed to multiple network elements. Part or all of the modules can be selected according to actual requirement to realize the purpose of the solution of the system of the embodiment.

It should be noted that the system of the above-mentioned embodiment corresponds to the method of the above-mentioned embodiment, therefore, the unspecified parts of the system of the above-mentioned embodiment can be obtained by referring to the content of the method of the above-mentioned embodiment, that is, the specific steps recited in the method of the above-mentioned embodiment can be understood as the functions that can be realized by the system of the above embodiment, and will not be repeated here.

Further, if the system for remote upgrading of the ECU in the above embodiment is realized in the form of a software function unit and sold or used as an independent product, it can be stored in a computer-readable storage medium.

The embodiments of the present disclosure have at least the following beneficial effects:
in view of the above-mentioned OTA remote upgrade problem of ECU in the first power mode, strict upgrade conditions are checked to ensure a suitable upgrade scenario and vehicle environment, by actively determining the power mode of the ECU, the basic configuration of the upgrade environment of the ECU in different power modes is automatically switched, and the ECU compatible with multiple power modes can complete the remote refresh of the ECU under the same vehicle environmental condition, and the remote refresh is performed based on the same set of interactive control process for upgrading, the remote upgrade process adapts to the power mode of the ECU without user awareness, which solves the technical problem that the ECU in the first power mode cannot be remotely upgraded by OTA, and extends an application scope of OTA remote upgrade technology in the ECU upgrade.

The various embodiments of the present disclosure have been described above, and the above description are exemplary, not exhaustive, and are not limited to the embodiments disclosed. Without deviating from the scope of the embodiments illustrated, many modifications and changes are apparent to the ordinary skilled person in the technical field. The terms used herein have been chosen to best explain the principle, practical application, or technical improvement of each embodiment in the market, or to make the embodiments disclosed herein understandable to other persons generally skilled in the technical field.

## Claims

1. An Electronic Control Unit, ECU, remote upgrade method, comprising:
in response to receiving an upgrade instruction input by a user, obtaining vehicle state information comprising an Adaptive Cruise Control, ACC, gear, a vehicle locking defense state, a vehicle speed, an electric quantity of the storage battery, battery voltage, a vehicle ignition state, and determining whether the vehicle state information satisfies predetermined upgrade preconditions comprising that the ACC gear is an ON gear, the vehicle locking defense state is activated, the vehicle speed is 0, the electric quantity of the storage battery is within a predetermined electric quantity range, the battery voltage is within a predetermined voltage range, and the vehicle ignition state is flameout;
when the vehicle state information satisfies the predetermined upgrade preconditions, identifying a power supply mode of a target ECU to be upgraded, and identifying a vehicle current gear; wherein the power supply mode comprises a first power supply mode and a second power supply mode, the first power supply mode is that a power battery supplies power to the target ECU, the power battery is used to supply power to the target ECU and a motor of the vehicle, and the target ECU is enabled in a vehicle ON gear; the second power supply mode is that both the power battery and a storage battery supply power to the target ECU, the storage battery is used to supply power to the target ECU and other components of the vehicle, and the target ECU is enabled in both the vehicle ON gear and a vehicle OFF gear;
when the power supply mode of the target ECU is the first power supply mode, and the vehicle current gear is an ON gear, transmitting a charging signal to a vehicle controller to control the vehicle controller to maintain charging the storage battery during the upgrade process of the target ECU, starting an upgrade process of the target ECU;
when the power supply mode of the target ECU is the first power supply mode, and the vehicle current gear is an OFF gear, transmitting a power-on request to the vehicle to activate the vehicle current gear to be the ON gear, when the vehicle current gear is activated to be the ON gear, transmitting a charging signal to a vehicle controller to control the vehicle controller to maintain charging the storage battery during the upgrade process of the target ECU, starting the upgrade process of the target ECU, when the vehicle current gear is not activated to be the ON gear, cancelling the upgrade process of the target ECU;
when the power supply mode of the target ECU is the second power supply mode, and the vehicle current gear is the OFF gear, starting the upgrade process of the target ECU; and
when the power supply mode of the target ECU is the second power supply mode, and the vehicle current gear is the ON gear, cancelling the upgrade process of the target ECU if the upgrade process of the target ECU has been started.

2. The ECU remote upgrade method according to claim 1, **characterized in that**, the method further comprises:
when executing the upgrade process of the target ECU, when the upgrade fails, automatically initiating a retry upgrade;
when the retry upgrade fails, performing a software rollback on the target ECU; when the software rollback succeeds, determining that the upgrade fails, and relevant functions of the target ECU are effective; when the software rollback fails, determining that the upgrade fails, and the relevant functions of the target ECU are ineffective;
generating an upgrade result, displaying the upgrade result on an AVNT interaction interface, and reporting the upgrade result to a background Over-The-Air, OTA, server; wherein the upgrade result comprises that the upgrade succeeds, the upgrade fails and the software rollback succeeds, or the upgrade fails and the software rollback fails.

3. The ECU remote upgrade method according to claim 2, **characterized in that**, the method further comprises:
when the power supply mode of the target ECU is the first power supply mode, after the upgrade result is generated, obtaining a current gear of a vehicle controller, when the current gear of the vehicle controller is the ON gear, transmitting a power-off request to the vehicle controller to control the vehicle controller to power off.

4. The ECU remote upgrade method according to any one of claims 1 to 3, **characterized in that**, the method further comprises:
before starting the upgrade process of the target ECU, disabling a Passive Entry Passive Start, PEPS, function and all Controller Area Network, CAN, application message communication.

5. An Electronic Control Unit, ECU, remote upgrade system, **characterized in that**, the system comprises:
an upgrade triggering unit (1), used to obtain vehicle state information comprising an
Adaptive Cruise Control, ACC, gear, a vehicle locking defense state, a vehicle speed, an electric quantity of the storage battery, battery voltage, a vehicle ignition state in response to receive an upgrade instruction input by a user, and determine whether the vehicle state information satisfies predetermined upgrade preconditions comprising that the ACC gear is an ON gear, the vehicle locking defense state is activated, the vehicle speed is 0, the electric quantity of the storage battery is within a predetermined electric quantity range, the battery voltage is within a predetermined voltage range, and the vehicle ignition state is flameout;
an identification unit (2), used to identify a power supply mode of a target ECU to be upgraded when the vehicle state information satisfies the predetermined upgrade preconditions, and identify a vehicle current gear; wherein the power supply mode comprises a first power supply mode and a second power supply mode, the first power supply mode is that a power battery supplies power to the target ECU, the power battery is used to supply power to the target ECU and a motor of the vehicle, and the target ECU is enabled in a vehicle ON gear; the second power supply mode is that both the power battery and a storage battery supply power to the target ECU, the storage battery is used to supply power to the target ECU and other components of the vehicle, and the target ECU is enabled in both the vehicle ON gear and a vehicle OFF gear;
an upgrading unit (3), used to start an upgrade process of the target ECU, when the power supply mode of the target ECU is the first power supply mode, and the vehicle current gear is an ON gear; when the power supply mode of the target ECU is the first power supply mode, and the vehicle current gear is an OFF gear, transmit a power-on request to the vehicle to activate the vehicle current gear to be the ON gear, when the vehicle current gear is activated to be the ON gear, start the upgrade process of the target ECU, when the vehicle current gear is not activated to be the ON gear, cancel the upgrade process of the target ECU; when the power supply mode of the target ECU is the second power supply mode, and the vehicle current gear is the OFF gear, start the upgrade process of the target ECU; and when the power supply mode of the target ECU is the second power supply mode, and the vehicle current gear is the ON gear, cancel the upgrade process of the target ECU if the upgrade process of the target ECU has been started; and
a charging control unit (4), used to transmit a charging signal to a vehicle controller to control the vehicle controller to maintain charging the storage battery during the upgrade process of the target ECU before starting the upgrade process of the target ECU, when the power supply mode of the target ECU to be upgraded is the first power supply mode.

6. The ECU remote upgrade system according to claim 5, **characterized in that**, the upgrading unit (3) is further used to:
when executing the upgrade process of the target ECU, when the upgrade fails, automatically initiate a retry upgrade;
when the retry upgrade fails, perform a software rollback on the target ECU; when the software rollback succeeds, determine that the upgrade fails, and relevant functions of the target ECU are effective; when the software rollback fails, determine that the upgrade fails, and the relevant functions of the target ECU are ineffective;
generate an upgrade result, display the upgrade result on an Audio Video Navigation Telematics, AVNT, interaction interface, and report the upgrade result to a background Over-The-Air, OTA, server; wherein the upgrade result comprises that the upgrade succeeds, the upgrade fails and the software rollback succeeds, or the upgrade fails and the software rollback fails.

7. The ECU remote upgrade system according to claim 6, **characterized in that**, the upgrading unit (3) is further used to:
when the power supply mode of the target ECU is the first power supply mode, after the upgrade result is generated, obtain a current gear of the vehicle controller, when the current gear of the vehicle controller is the ON gear, transmit a power-off request to the vehicle controller to control the vehicle controller to power off.

## Patentansprüche

1. Ein Verfahren zur Fernaktualisierung einer elektronischen Steuereinheit, ECU, umfassend:
als Reaktion auf das Empfangen einer von einem Benutzer eingegebenen Aktualisierungsanweisung, Erhalten von Fahrzeugzustandsinformationen, die einen Gang eines adaptiven Tempomats, ACC, einen Fahrzeugverriegelungsschutz-Zustand, eine Fahrzeuggeschwindigkeit, eine elektrische Ladungsmenge der Speicherbatterie, eine Batteriespannung, einen Fahrzeugzündungszustand umfassen, und Bestimmen, ob die Fahrzeugzustandsinformationen vorbestimmte Aktualisierungsvoraussetzungen erfüllen, die umfassen, dass der ACC-Gang ein EIN-Gang ist, der Fahrzeugverriegelungsschutz-Zustand aktiviert ist, die Fahrzeuggeschwindigkeit 0 ist, die elektrische Ladungsmenge der Speicherbatterie innerhalb eines vorbestimmten elektrischen Ladungsmengenbereichs liegt, die Batteriespannung innerhalb eines vorbestimmten Spannungsbereichs liegt und der Fahrzeugzündungszustand Motor-aus (Flameout) ist;
wenn die Fahrzeugzustandsinformationen die vorbestimmten Aktualisierungsvoraussetzungen erfüllen, Identifizieren eines Stromversorgungsmodus einer zu aktualisierenden Ziel-ECU und Identifizieren eines aktuellen Fahrzeuggangs; wobei der Stromversorgungsmodus einen ersten Stromversorgungsmodus und einen zweiten Stromversorgungsmodus umfasst, der erste Stromversorgungsmodus darin besteht, dass eine Leistungsbatterie die Ziel-ECU mit Strom versorgt, die Leistungsbatterie verwendet wird, um die Ziel-ECU und einen Motor des Fahrzeugs mit Strom zu versorgen, und die Ziel-ECU in einem Fahrzeug-EIN-Gang aktiviert wird; der zweite Stromversorgungsmodus darin besteht, dass sowohl die Leistungsbatterie als auch eine Speicherbatterie die Ziel-ECU mit Strom versorgen, die Speicherbatterie verwendet wird, um die Ziel-ECU und andere Komponenten des Fahrzeugs mit Strom zu versorgen, und die Ziel-ECU sowohl in dem Fahrzeug-EIN-Gang als auch in einem Fahrzeug-AUS-Gang aktiviert wird;
wenn der Stromversorgungsmodus der Ziel-ECU der erste Stromversorgungsmodus ist und der aktuelle Fahrzeuggang ein EIN-Gang ist, Übertragen eines Ladesignals an eine Fahrzeugsteuerung, um die Fahrzeugsteuerung zu steuern, um das Laden der Speicherbatterie während des Aktualisierungsprozesses der Ziel-ECU aufrechtzuerhalten, Starten eines Aktualisierungsprozesses der Ziel-ECU;
wenn der Stromversorgungsmodus der Ziel-ECU der erste Stromversorgungsmodus ist und der aktuelle Fahrzeuggang ein AUS-Gang ist, Übertragen einer Einschaltanforderung an das Fahrzeug, um den aktuellen Fahrzeuggang so zu aktivieren, dass er der EIN-Gang ist, wenn der aktuelle Fahrzeuggang so aktiviert ist, dass er der EIN-Gang ist, Übertragen eines Ladesignals an eine Fahrzeugsteuerung, um die Fahrzeugsteuerung zu steuern, um das Laden der Speicherbatterie während des Aktualisierungsprozesses der Ziel-ECU aufrechtzuerhalten, Starten des Aktualisierungsprozesses der Ziel-ECU, wenn der aktuelle Fahrzeuggang nicht so aktiviert wird, dass er der EIN-Gang ist, Abbrechen des Aktualisierungsprozesses der Ziel-ECU;
wenn der Stromversorgungsmodus der Ziel-ECU der zweite Stromversorgungsmodus ist und der aktuelle Fahrzeuggang der AUS-Gang ist, Starten des Aktualisierungsprozesses der Ziel-ECU; und
wenn der Stromversorgungsmodus der Ziel-ECU der zweite Stromversorgungsmodus ist und der aktuelle Fahrzeuggang der EIN-Gang ist, Abbrechen des Aktualisierungsprozesses der Ziel-ECU, wenn der Aktualisierungsprozess der Ziel-ECU gestartet wurde.

2. Das Verfahren zur Fernaktualisierung einer ECU nach Anspruch 1, **dadurch gekennzeichnet, dass** das Verfahren ferner umfasst:
beim Ausführen des Aktualisierungsprozesses der Ziel-ECU, wenn die Aktualisierung fehlschlägt, automatisches Initiieren einer erneuten Aktualisierung;
wenn die erneute Aktualisierung fehlschlägt, Durchführen eines Software-Rollbacks an der Ziel-ECU; wenn das Software-Rollback erfolgreich ist, Bestimmen, dass die Aktualisierung fehlgeschlagen ist und relevante Funktionen der Ziel-ECU wirksam sind; wenn das Software-Rollback fehlschlägt, Bestimmen, dass die Aktualisierung fehlgeschlagen ist und die relevanten Funktionen der Ziel-ECU unwirksam sind;
Erzeugen eines Aktualisierungsergebnisses, Anzeigen des Aktualisierungsergebnisses auf einer AVNT-Interaktionsschnittstelle und Melden des Aktualisierungsergebnisses an einen Hintergrund-Over-The-Air-, OTA-, Server;
wobei das Aktualisierungsergebnis umfasst, dass die Aktualisierung erfolgreich ist, die Aktualisierung fehlschlägt und das Software-Rollback erfolgreich ist, oder die Aktualisierung fehlschlägt und das Software-Rollback fehlschlägt.

3. Das Verfahren zur Fernaktualisierung einer ECU nach Anspruch 2, **dadurch gekennzeichnet, dass** das Verfahren ferner umfasst:
wenn der Stromversorgungsmodus der Ziel-ECU der erste Stromversorgungsmodus ist, nach dem Erzeugen des Aktualisierungsergebnisses, Erhalten eines aktuellen Gangs einer Fahrzeugsteuerung, wenn der aktuelle Gang der Fahrzeugsteuerung der EIN-Gang ist, Übertragen einer Ausschaltanforderung an die Fahrzeugsteuerung, um die Fahrzeugsteuerung so zu steuern, dass sie sich ausschaltet.

4. Das Verfahren zur Fernaktualisierung einer ECU nach einem der Ansprüche 1 bis 3, **dadurch gekennzeichnet, dass** das Verfahren ferner umfasst:
vor dem Starten des Aktualisierungsprozesses der Ziel-ECU, Deaktivieren einer Passive-Entry-Passive-Start-, PEPS-, Funktion und der gesamten Controller-Area-Network-, CAN-, Anwendungsnachrichtenkommunikation.

5. Ein System zur Fernaktualisierung einer elektronischen Steuereinheit, ECU, **dadurch gekennzeichnet, dass** das System umfasst:
eine Aktualisierungsauslöseeinheit (1), die verwendet wird, um als Reaktion auf das Empfangen einer von einem Benutzer eingegebenen Aktualisierungsanweisung Fahrzeugzustandsinformationen zu erhalten, die einen Gang eines adaptiven Tempomats, ACC, einen Fahrzeugverriegelungsschutz-Zustand, eine Fahrzeuggeschwindigkeit, eine elektrische Ladungsmenge der Speicherbatterie, eine Batteriespannung und einen Fahrzeugzündungszustand umfassen, und zu bestimmen, ob die Fahrzeugzustandsinformationen vorbestimmte Aktualisierungsvoraussetzungen erfüllen, die umfassen, dass der ACC-Gang ein EIN-Gang ist, der Fahrzeugverriegelungsschutz-Zustand aktiviert ist, die Fahrzeuggeschwindigkeit 0 ist, die elektrische Ladungsmenge der Speicherbatterie innerhalb eines vorbestimmten elektrischen Ladungsmengenbereichs liegt, die Batteriespannung innerhalb eines vorbestimmten Spannungsbereichs liegt und der Fahrzeugzündungszustand Motor-aus (Flameout) ist;
eine Identifikationseinheit (2), die verwendet wird, um einen Stromversorgungsmodus einer zu aktualisierenden Ziel-ECU zu identifizieren, wenn die Fahrzeugzustandsinformationen die vorbestimmten Aktualisierungsvoraussetzungen erfüllen, und einen aktuellen Fahrzeuggang zu identifizieren; wobei der Stromversorgungsmodus einen ersten Stromversorgungsmodus und einen zweiten Stromversorgungsmodus umfasst, der erste Stromversorgungsmodus darin besteht, dass eine Leistungsbatterie die Ziel-ECU mit Strom versorgt, die Leistungsbatterie verwendet wird, um die Ziel-ECU und einen Motor des Fahrzeugs mit Strom zu versorgen, und die Ziel-ECU in einem Fahrzeug-EIN-Gang aktiviert wird; der zweite Stromversorgungsmodus darin besteht, dass sowohl die Leistungsbatterie als auch eine Speicherbatterie die Ziel-ECU mit Strom versorgen, die Speicherbatterie verwendet wird, um die Ziel-ECU und andere Komponenten des Fahrzeugs mit Strom zu versorgen, und die Ziel-ECU sowohl in dem Fahrzeug-EIN-Gang als auch in einem Fahrzeug-AUS-Gang aktiviert wird;
eine Aktualisierungseinheit (3), die verwendet wird, um einen Aktualisierungsprozess der Ziel-ECU zu starten, wenn der Stromversorgungsmodus der Ziel-ECU der erste Stromversorgungsmodus ist und der aktuelle Fahrzeuggang ein EIN-Gang ist; wenn der Stromversorgungsmodus der Ziel-ECU der erste Stromversorgungsmodus ist und der aktuelle Fahrzeuggang ein AUS-Gang ist, eine Einschaltanforderung an das Fahrzeug zu übertragen, um den aktuellen Fahrzeuggang so zu aktivieren, dass er der EIN-Gang ist, wenn der aktuelle Fahrzeuggang so aktiviert ist, dass er der EIN-Gang ist, den Aktualisierungsprozess der Ziel-ECU zu starten, wenn der aktuelle Fahrzeuggang nicht so aktiviert wird, dass er der EIN-Gang ist, den Aktualisierungsprozess der Ziel-ECU abzubrechen; wenn der Stromversorgungsmodus der Ziel-ECU der zweite Stromversorgungsmodus ist und der aktuelle Fahrzeuggang der AUS-Gang ist, den Aktualisierungsprozess der Ziel-ECU zu starten; und wenn der Stromversorgungsmodus der Ziel-ECU der zweite Stromversorgungsmodus ist und der aktuelle Fahrzeuggang der EIN-Gang ist, den Aktualisierungsprozess der Ziel-ECU abzubrechen, wenn der Aktualisierungsprozess der Ziel-ECU gestartet wurde; und
eine Ladesteuereinheit (4), die verwendet wird, um ein Ladesignal an eine Fahrzeugsteuerung zu übertragen, um die Fahrzeugsteuerung so zu steuern, dass sie das Laden der Speicherbatterie während des Aktualisierungsprozesses der Ziel-ECU aufrechterhält, bevor der Aktualisierungsprozess der Ziel-ECU gestartet wird, wenn der Stromversorgungsmodus der zu aktualisierenden Ziel-ECU der erste Stromversorgungsmodus ist.

6. Das System zur Fernaktualisierung einer ECU nach Anspruch 5, **dadurch gekennzeichnet, dass** die Aktualisierungseinheit (3) ferner verwendet wird, um:
beim Ausführen des Aktualisierungsprozesses der Ziel-ECU, wenn die Aktualisierung fehlschlägt, automatisch eine erneute Aktualisierung zu initiieren;
wenn die erneute Aktualisierung fehlschlägt, ein Software-Rollback an der Ziel-ECU durchzuführen; wenn das Software-Rollback erfolgreich ist, zu bestimmen, dass die Aktualisierung fehlgeschlagen ist und relevante Funktionen der Ziel-ECU wirksam sind; wenn das Software-Rollback fehlschlägt, zu bestimmen, dass die Aktualisierung fehlgeschlagen ist und die relevanten Funktionen der Ziel-ECU unwirksam sind;
ein Aktualisierungsergebnis zu erzeugen, das Aktualisierungsergebnis auf einer Audio-Video-Navigations-Telematik-, AVNT-, Interaktionsschnittstelle anzuzeigen und das Aktualisierungsergebnis an einen Hintergrund-Over-The-Air-, OTA-, Server zu melden; wobei das Aktualisierungsergebnis umfasst, dass die Aktualisierung erfolgreich ist, die Aktualisierung fehlschlägt und das Software-Rollback erfolgreich ist, oder die Aktualisierung fehlschlägt und das Software-Rollback fehlschlägt.

7. Das System zur Fernaktualisierung einer ECU nach Anspruch 6, **dadurch gekennzeichnet, dass** die Aktualisierungseinheit (3) ferner verwendet wird, um:
wenn der Stromversorgungsmodus der Ziel-ECU der erste Stromversorgungsmodus ist, nach dem Erzeugen des Aktualisierungsergebnisses, einen aktuellen Gang der Fahrzeugsteuerung zu erhalten, wenn der aktuelle Gang der Fahrzeugsteuerung der EIN-Gang ist, eine Ausschaltanforderung an die Fahrzeugsteuerung zu übertragen, um die Fahrzeugsteuerung so zu steuern, dass sie sich ausschaltet.

## Revendications

1. Un procédé de mise à niveau à distance d'unité de commande électronique, ECU, comprenant:
en réponse à la réception d'une instruction de mise à niveau entrée par un utilisateur, l'obtention d'informations d'état du véhicule comprenant un rapport de régulateur de vitesse adaptatif, ACC, un état de défense de verrouillage de véhicule, une vitesse de véhicule, une quantité électrique de la batterie de stockage, une tension de batterie, un état d'allumage de véhicule, et le fait de déterminer si les informations d'état du véhicule satisfont à des conditions préalables de mise à niveau prédéterminées comprenant le fait que le rapport ACC est un rapport en marche ON, l'état de défense de verrouillage de véhicule est activé, la vitesse de véhicule est de 0, la quantité électrique de la batterie de stockage est comprise dans une plage de quantités électriques prédéterminée, la tension de batterie est comprise dans une plage de tensions prédéterminée, et l'état d'allumage du véhicule est l'arrêt du moteur;
lorsque les informations d'état du véhicule satisfont aux conditions préalables de mise à niveau prédéterminées, l'identification d'un mode d'alimentation électrique d'une ECU cible à mettre à niveau, et l'identification d'un rapport actuel du véhicule; dans lequel le mode d'alimentation électrique comprend un premier mode d'alimentation électrique et un second mode d'alimentation électrique, le premier mode d'alimentation électrique est celui où une batterie de puissance fournit de l'énergie à l'ECU cible, la batterie de puissance est utilisée pour fournir de l'énergie à l'ECU cible et à un moteur du véhicule, et l'ECU cible est activée dans un rapport de véhicule en marche ON; le second mode d'alimentation électrique est celui où à la fois la batterie de puissance et une batterie de stockage fournissent de l'énergie à l'ECU cible, la batterie de stockage est utilisée pour fournir de l'énergie à l'ECU cible et à d'autres composants du véhicule, et l'ECU cible est activée à la fois dans le rapport de véhicule en marche ON et un rapport de véhicule à l'arrêt OFF;
lorsque le mode d'alimentation électrique de l'ECU cible est le premier mode d'alimentation électrique, et que le rapport actuel du véhicule est un rapport en marche ON, la transmission d'un signal de charge à un contrôleur de véhicule pour commander au contrôleur de véhicule de maintenir la charge de la batterie de stockage pendant le processus de mise à niveau de l'ECU cible, et le démarrage d'un processus de mise à niveau de l'ECU cible;
lorsque le mode d'alimentation électrique de l'ECU cible est le premier mode d'alimentation électrique, et que le rapport actuel du véhicule est un rapport à l'arrêt OFF, la transmission d'une demande de mise sous tension au véhicule pour activer le rapport actuel du véhicule pour qu'il soit le rapport en marche ON, lorsque le rapport actuel du véhicule est activé pour être le rapport en marche ON, la transmission d'un signal de charge à un contrôleur de véhicule pour commander au contrôleur de véhicule de maintenir la charge de la batterie de stockage pendant le processus de mise à niveau de l'ECU cible, le démarrage du processus de mise à niveau de l'ECU cible, lorsque le rapport actuel du véhicule n'est pas activé pour être le rapport en marche ON, l'annulation du processus de mise à niveau de l'ECU cible;
lorsque le mode d'alimentation électrique de l'ECU cible est le second mode d'alimentation électrique, et que le rapport actuel du véhicule est le rapport à l'arrêt OFF, le démarrage du processus de mise à niveau de l'ECU cible; et
lorsque le mode d'alimentation électrique de l'ECU cible est le second mode d'alimentation électrique, et que le rapport actuel du véhicule est le rapport en marche ON, l'annulation du processus de mise à niveau de l'ECU cible si le processus de mise à niveau de l'ECU cible a été démarré.

2. Le procédé de mise à niveau à distance d'ECU selon la revendication 1, **caractérisé en ce que** le procédé comprend en outre:
lors de l'exécution du processus de mise à niveau de l'ECU cible, lorsque la mise à niveau échoue, le lancement automatique d'une nouvelle tentative de mise à niveau;
lorsque la nouvelle tentative de mise à niveau échoue, l'exécution d'une restauration logicielle sur l'ECU cible; lorsque la restauration logicielle réussit, la détermination du fait que la mise à niveau a échoué, et que les fonctions pertinentes de l'ECU cible sont effectives; lorsque la restauration logicielle échoue, la détermination du fait que la mise à niveau a échoué, et que les fonctions pertinentes de l'ECU cible sont ineffectives;
la génération d'un résultat de mise à niveau, l'affichage du résultat de mise à niveau sur une interface d'interaction AVNT, et le rapport du résultat de mise à niveau à un serveur sans fil, OTA (Over-The-Air), d'arrière-plan;
dans lequel le résultat de mise à niveau comprend le fait que la mise à niveau a réussi, la mise à niveau a échoué et la restauration logicielle a réussi, ou la mise à niveau a échoué et la restauration logicielle a échoué.

3. Le procédé de mise à niveau à distance d'ECU selon la revendication 2, **caractérisé en ce que** le procédé comprend en outre:
lorsque le mode d'alimentation électrique de l'ECU cible est le premier mode d'alimentation électrique, après la génération du résultat de mise à niveau, l'obtention d'un rapport actuel d'un contrôleur de véhicule, lorsque le rapport actuel du contrôleur de véhicule est le rapport en marche ON, la transmission d'une demande de mise hors tension au contrôleur de véhicule pour commander au contrôleur de véhicule de se mettre hors tension.

4. Le procédé de mise à niveau à distance d'ECU selon l'une quelconque des revendications 1 à 3, **caractérisé en ce que** le procédé comprend en outre:
avant le démarrage du processus de mise à niveau de l'ECU cible, la désactivation d'une fonction d'entrée passive/démarrage passif, PEPS (Passive Entry Passive Start), et de l'ensemble des communications de messages d'application de réseau de zone de contrôleur, CAN (Controller Area Network).

5. Un système de mise à niveau à distance d'unité de commande électronique, ECU, **caractérisé en ce que** le système comprend:
une unité de déclenchement de mise à niveau (1), utilisée pour obtenir des informations d'état du véhicule comprenant un rapport de régulateur de vitesse adaptatif, ACC, un état de défense de verrouillage de véhicule, une vitesse de véhicule, une quantité électrique de la batterie de stockage, une tension de batterie, un état d'allumage de véhicule en réponse à la réception d'une instruction de mise à niveau entrée par un utilisateur, et pour déterminer si les informations d'état du véhicule satisfont à des conditions préalables de mise à niveau prédéterminées comprenant le fait que le rapport ACC est un rapport en marche ON, l'état de défense de verrouillage de véhicule est activé, la vitesse de véhicule est de 0, la quantité électrique de la batterie de stockage est comprise dans une plage de quantités électriques prédéterminée, la tension de batterie est comprise dans une plage de tensions prédéterminée, et l'état d'allumage du véhicule est l'arrêt du moteur;
une unité d'identification (2), utilisée pour identifier un mode d'alimentation électrique d'une ECU cible à mettre à niveau lorsque les informations d'état du véhicule satisfont aux conditions préalables de mise à niveau prédéterminées, et pour identifier un rapport actuel du véhicule; dans lequel le mode d'alimentation électrique comprend un premier mode d'alimentation électrique et un second mode d'alimentation électrique, le premier mode d'alimentation électrique est celui où une batterie de puissance fournit de l'énergie à l'ECU cible, la batterie de puissance est utilisée pour fournir de l'énergie à l'ECU cible et à un moteur du véhicule, et l'ECU cible est activée dans un rapport de véhicule en marche ON; le second mode d'alimentation électrique est celui où à la fois la batterie de puissance et une batterie de stockage fournissent de l'énergie à l'ECU cible, la batterie de stockage est utilisée pour fournir de l'énergie à l'ECU cible et à d'autres composants du véhicule, et l'ECU cible est activée à la fois dans le rapport de véhicule en marche ON et un rapport de véhicule à l'arrêt OFF;
une unité de mise à niveau (3), utilisée pour démarrer un processus de mise à niveau de l'ECU cible, lorsque le mode d'alimentation électrique de l'ECU cible est le premier mode d'alimentation électrique, et que le rapport actuel du véhicule est un rapport en marche ON; lorsque le mode d'alimentation électrique de l'ECU cible est le premier mode d'alimentation électrique, et que le rapport actuel du véhicule est un rapport à l'arrêt OFF, pour transmettre une demande de mise sous tension au véhicule pour activer le rapport actuel du véhicule pour qu'il soit le rapport en marche ON, lorsque le rapport actuel du véhicule est activé pour être le rapport en marche ON, pour démarrer le processus de mise à niveau de l'ECU cible, lorsque le rapport actuel du véhicule n'est pas activé pour être le rapport en marche ON, pour annuler le processus de mise à niveau de l'ECU cible; lorsque le mode d'alimentation électrique de l'ECU cible est le second mode d'alimentation électrique, et que le rapport actuel du véhicule est le rapport à l'arrêt OFF, pour démarrer le processus de mise à niveau de l'ECU cible; et lorsque le mode d'alimentation électrique de l'ECU cible est le second mode d'alimentation électrique, et que le rapport actuel du véhicule est le rapport en marche ON, pour annuler le processus de mise à niveau de l'ECU cible si le processus de mise à niveau de l'ECU cible a été démarré; et
une unité de commande de charge (4), utilisée pour transmettre un signal de charge à un contrôleur de véhicule pour commander au contrôleur de véhicule de maintenir la charge de la batterie de stockage pendant le processus de mise à niveau de l'ECU cible avant de démarrer le processus de mise à niveau de l'ECU cible, lorsque le mode d'alimentation électrique de l'ECU cible à mettre à niveau est le premier mode d'alimentation électrique.

6. Le système de mise à niveau à distance d'ECU selon la revendication 5, **caractérisé en ce que** l'unité de mise à niveau (3) est en outre utilisée pour:
lors de l'exécution du processus de mise à niveau de l'ECU cible, lorsque la mise à niveau échoue, lancer automatiquement une nouvelle tentative de mise à niveau;
lorsque la nouvelle tentative de mise à niveau échoue, exécuter une restauration logicielle sur l'ECU cible; lorsque la restauration logicielle réussit, déterminer que la mise à niveau a échoué, et que les fonctions pertinentes de l'ECU cible sont effectives; lorsque la restauration logicielle échoue, déterminer que la mise à niveau a échoué, et que les fonctions pertinentes de l'ECU cible sont ineffectives;
générer un résultat de mise à niveau, afficher le résultat de mise à niveau sur une interface d'interaction de télématique de navigation audio et vidéo, AVNT (Audio Video Navigation Telematics), et rapporter le résultat de mise à niveau à un serveur sans fil, OTA (Over-The-Air), d'arrière-plan; dans lequel le résultat de mise à niveau comprend le fait que la mise à niveau a réussi, la mise à niveau a échoué et la restauration logicielle a réussi, ou la mise à niveau a échoué et la restauration logicielle a échoué.

7. Le système de mise à niveau à distance d'ECU selon la revendication 6, **caractérisé en ce que** l'unité de mise à niveau (3) est en outre utilisée pour:
lorsque le mode d'alimentation électrique de l'ECU cible est le premier mode d'alimentation électrique, après la génération du résultat de mise à niveau, obtenir un rapport actuel du contrôleur de véhicule, lorsque le rapport actuel du contrôleur de véhicule est le rapport en marche ON, transmettre une demande de mise hors tension au contrôleur de véhicule pour commander au contrôleur de véhicule de se mettre hors tension.
